# FASCICULE DE BREVET EUROPEEN

(11) **EP 4 194 374 B1**
(45) Date de publication et mention de la délivrance du brevet: **07.05.2025**
(21) Numéro de dépôt: 22208171.3
(22) Date de dépôt: 17.11.2022
(51) Int. Cl.: B65G 25/02, B62D 65/18, B23P 21/00

(54) **INSTALLATION DE TRANSPORT DE PIÈCES DE FORMES DIFFÉRENTES, À TIGES DE SUPPORT INTERCHANGEABLES**
ANLAGE ZUM TRANSPORT VON TEILEN UNTERSCHIEDLICHER FORM MIT AUSTAUSCHBAREN STÜTZSTANGEN
INSTALLATION FOR TRANSPORTING PARTS OF DIFFERENT SHAPES, WITH INTERCHANGEABLE SUPPORT RODS

(30) Priorité: 08.12.2021 FR 2113115
(43) Date de publication de la demande: 14.06.2023
(73) Titulaire: Stellantis Auto SAS, 78300 Poissy (FR)
(72) Inventeur: EPERT, DIDIER, 22190 PLERIN (FR)
(74) Mandataire: BCIP

(56) Documents cités:
- DE-A1- 3 903 518
- JP-A- H04 334 678
- JP-A- S5 922 808
- JP-A- S60 176 872
- JP-A- S63 123 710

## Description

### Domaine technique de l'invention

L'invention concerne les installations de transport destinées à transporter des composants, éventuellement dans des chaînes de montage (ou assemblage).

### Etat de la technique

Dans certains domaines techniques, comme par exemple celui de l'assemblage (éventuellement par ferrage), on utilise des installations de transport pour transporter des composants entre des postes de travail où ils font l'objet d'au moins une opération (éventuellement automatisée). C'est par exemple le cas de composants destinés à équiper des véhicules, éventuellement de type automobile, comme par exemple des soubassements de caisse.

Certaines de ces installations de transport comprennent deux barres de transport parallèles entre elles, translatables verticalement et longitudinalement simultanément, et comprenant chacune au moins un groupe de tiges verticales destinées à supporter temporairement un composant avec des tiges d'un groupe de la barre de transport voisine. Certaines de ces barres de transport (parfois appelées « barres navette ») peuvent être très longues afin de permettre le transport simultané de plusieurs composants successifs qui font alors l'objet d'opérations dans des postes de travail successifs. Ainsi, certaines barres de transport peuvent mesurer environ trente mètres et desservir simultanément dix postes de travail.

Des composants sont initialement placés sur les tiges verticales de groupes voisins des barres de transport, puis ces dernières sont translatées longitudinalement simultanément vers des postes de travail au niveau desquels elles sont arrêtées simultanément pour que les composants transportés soient totalement pris en charge localement par des supports dédiés avant que les barres de transport soient translatées verticalement vers le bas simultanément. Puis, une fois que toutes les opérations ont été réalisées sur les composants dans les postes de travail concernés, les barres de transport sont translatées verticalement vers le haut simultanément afin que leurs groupes de tiges verticales supportent de nouveau respectivement ces composants, puis sont translatées longitudinalement simultanément vers les postes de travail suivants au niveau desquels elles sont de nouveau arrêtées simultanément pour que les composants transportés soient totalement pris en charge localement par des supports dédiés avant que les barres de transport soient de nouveau translatées verticalement vers le bas simultanément. Et ainsi de suite.

Les tiges verticales de chaque groupe étant solidarisées fixement aux barres de transport, elles sont donc adaptées en hauteur (ou longueur verticale) au support d'un seul composant d'une unique forme. Si l'on veut transporter d'autres composants ayant une autre forme (même légèrement différente), on est contraint soit de remplacer manuellement au moins une tige de chaque groupe de l'installation de transport ce qui est chronophage et ralentit notablement la production, soit de remplacer manuellement les barres de transport de l'installation de transport par d'autres barres de transport ayant des groupes de tiges verticales adaptés à ces autres composants ce qui est chronophage et complexe et ralentit notablement la production, soit encore d'utiliser une autre installation de transport adaptée à ces autres composants et associée à d'autres postes de travail ce qui est très onéreux.

Cette situation résulte du fait qu'il n'est pas possible, ou alors très compliqué (notamment en raison des nombreuses translations verticales et longitudinales simultanées, des contraintes imposées localement et des coûts), d'électrifier les barres de transport afin de rendre adaptables en hauteur leurs tiges verticales en fonction des composants à transporter.

L'invention a donc notamment pour but d'améliorer la situation, afin de rendre les installations de transport adaptables au transport de composants ayant des formes différentes.

Le document JPS 60-176872 divulgue une installation de transport selon le préambule de la revendication 1.

### Présentation de l'invention

Elle propose à cet effet une installation de transport selon la revendication 1.

Grâce à l'invention, il est désormais possible d'adapter l'installation de transport en fonction des composants à transporter, par de simples inter-changements entre les tige et tige de remplacement associées de chaque groupe.

L'installation de transport selon l'invention peut comporter d'autres caractéristiques qui peuvent être prises séparément ou en combinaison, et notamment :
- en présence de la première option, chaque pièce peut avoir un axe de rotation décalé par rapport à la direction de la force exercée sur la tige ou tige de remplacement associée pendant le support d'un composant afin de participer au maintien de cette dernière dans sa position verticale ;
- également en présence de la première option, chaque embase peut comprendre une première butée sur laquelle s'appuie la tige de remplacement associée à une tige lorsque cette dernière est en position verticale, et une seconde butée sur laquelle s'appuie la tige associée à une tige de remplacement lorsque cette dernière est en position verticale ;

- également en présence de la première option, chaque pièce peut être montée à rotation sur l'embase associée sous une force de compression participant au maintien de sa tige ou tige de remplacement associée dans sa position verticale pendant le support ;
- en présence de la dernière sous-option, chaque embase peut comprendre un ressort comprimé exerçant la force de compression ;
- son dispositif de contrôle peut comprendre deux supports destinés à être installés sur une surface fixe en étant associés respectivement aux barres de transport et sur chacun desquels sont installés un mécanisme de couplage couplé à une came et deux vérins propres chacun à agir sur le mécanisme de couplage associé pour provoquer un déplacement de la came associée propre à placer en position verticale la tige ou tige de remplacement associée d'un groupe devant participer à un support ;
- en présence de la dernière option, chaque came peut être propre à être couplée à la seconde extrémité du levier correspondant par action du vérin associé sur le mécanisme de couplage associé pendant chaque changement de la tige par la tige de remplacement associée ou de la tige de remplacement par la tige associée d'un groupe ;
- également en présence de la dernière option ou de la dernière sous-option, chaque mécanisme de couplage peut comprendre deux biellettes montées à rotation sur l'un des supports et couplées à rotation à la came associée ;
- elle peut être propre à transporter des composants destinés à équiper des véhicules, éventuellement de type automobile. Par exemple, de tels composants peuvent être des soubassements de caisse.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
La figure 1 illustre schématiquement et fonctionnellement, dans une vue de côté, une partie d'un exemple d'installation de transport selon l'invention avec ses barres de transport placées dans une position basse dans l'attente de composants à transporter,
La figure 2 illustre schématiquement et fonctionnellement, dans une vue de côté, l'installation de transport de la figure 1 avec ses barres de transport placées dans une position haute après récupération de composants à transporter,
La figure 3 illustre schématiquement, dans une vue de face au niveau d'une extrémité, un exemple de réalisation d'une installation de transport selon l'invention avec ses barres de transport placées dans une position haute avant un couplage au dispositif de contrôle,
La figure 4 illustre schématiquement, dans une vue de côté, un exemple de réalisation d'un dispositif de support adaptable d'une installation de transport selon l'invention, avec sa tige placée en position verticale,
La figure 5 illustre schématiquement, dans une vue de côté, le dispositif de support adaptable de la figure 4, avec sa tige de remplacement placée en position verticale,
La figure 6 illustre schématiquement, dans une vue de côté, le dispositif de support adaptable de la figure 4 et un exemple de réalisation d'une partie d'un dispositif de contrôle, au début d'une phase de remplacement d'une tige par la tige de remplacement associée,
La figure 7 illustre schématiquement, dans une vue de côté, les dispositif de support adaptable et dispositif de contrôle de la figure 6, à un stade intermédiaire de la phase de remplacement de la tige par la tige de remplacement associée,
La figure 8 illustre schématiquement, dans une vue de côté, les dispositif de support adaptable et dispositif de contrôle de la figure 6, un peu avant la fin de la phase de remplacement de la tige par la tige de remplacement associée, et
La figure 9 illustre schématiquement, dans une vue de côté, les dispositif de support adaptable et dispositif de contrôle de la figure 6, à la fin de la phase de remplacement de la tige par la tige de remplacement associée.

### Description détaillée de l'invention

L'invention a notamment pour but de proposer une installation de transport IT adaptable au transport de composants Cm ayant des formes différentes.

Dans ce qui suit, on considère, à titre d'exemple non limitatif, que les composants Cm devant être transportés par l'installation de transport IT sont destinés à faire partie de véhicules, éventuellement de type automobile. Mais l'invention n'est pas limitée à cette application. Elle concerne en effet tout composant pouvant être transporté par une installation de transport IT.

Par ailleurs, on considère dans ce qui suit, à titre d'exemple non limitatif, que les composants Cm devant être transportés par l'installation de transport IT sont des sous-parties de structures (ou caisses) de véhicules automobiles et plus précisément des soubassements de caisse devant faire l'objet de soudage(s) dans des postes de soudage d'une chaîne de montage (ou d'assemblage). Mais l'invention n'est pas limitée à ce type de composant.

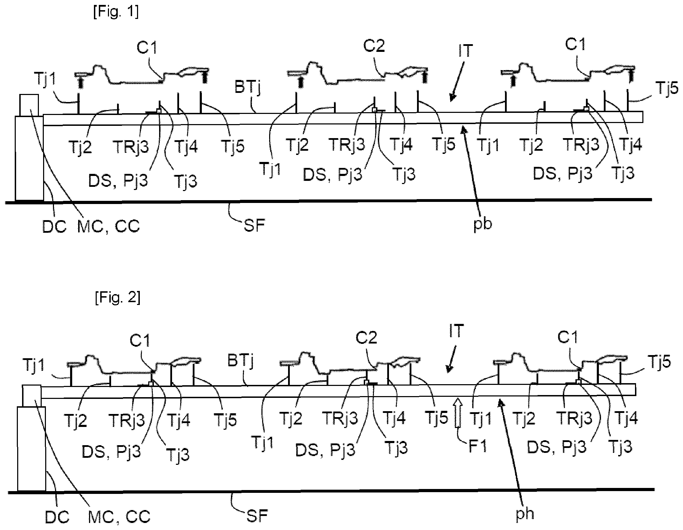

On a schématiquement illustré sur les figures 1 et 2 une partie d'un exemple d'installation de transport IT selon l'invention avec ses barres de transport BTj (j = 1 ou 2) placées respectivement dans une position basse pb dans l'attente de composants Cm à transporter et dans une position haute ph après récupération de composants Cm à transporter. Une telle installation de transport IT peut être installée sur une surface fixe SF d'une chaîne de montage (ou assemblage).

On notera que dans l'exemple illustré non limitativement sur les figures 1 et 2 l'installation de transport IT peut transporter au moins trois composants Cm (ici deux premiers composants C1 (m = 1) et un second composant C2 (m = 2)). Mais l'installation de transport IT peut transporter n'importe quel nombre de composants Cm, dès lors que ce nombre est supérieur ou égal à un. Ainsi, ce nombre peut être égal à cinq ou dix, voire plus encore.

On notera également que ce qui différencie un premier composant C1 d'un second composant C2 c'est la forme.

Comme illustré au moins partiellement sur les figures 1 à 3, une installation de transport IT, selon l'invention, comprend deux barres de transport BTj, au moins un groupe d'au moins deux tiges Tjk (avec au moins une tige Tjk associée à une tige de remplacement TRjk au sein d'un dispositif de support DS), et au moins un dispositif de contrôle DC.

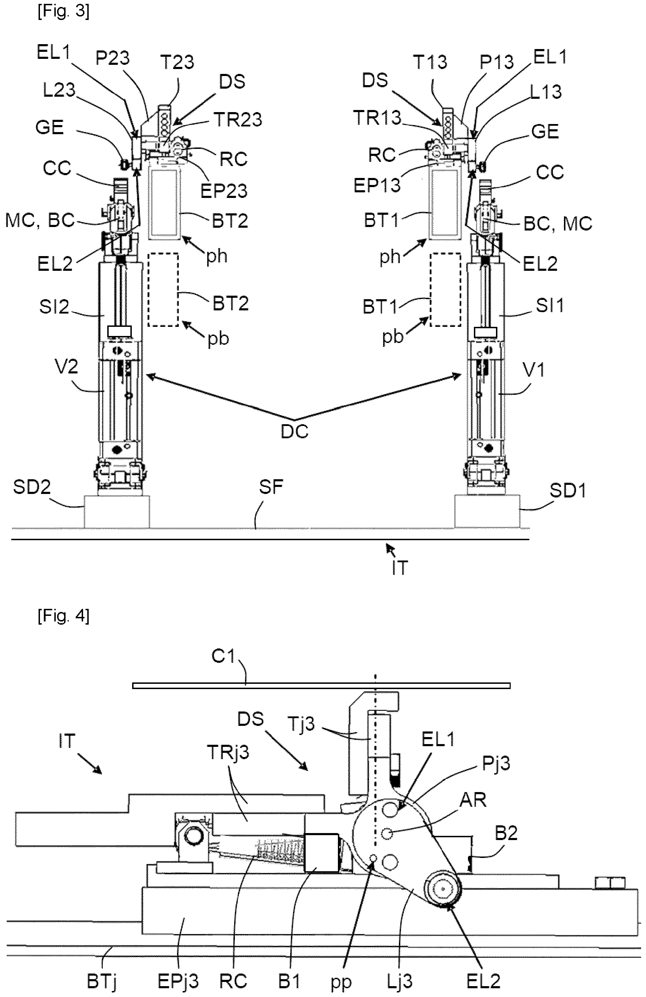

Les deux barres de transport BTj sont parallèles entre elles (comme illustré sur la figure 3), et translatables verticalement et longitudinalement simultanément. Ces translations sont assurées par un mécanisme de déplacement motorisé, non illustré et faisant partie de l'installation de transport IT. La translation verticale (matérialisée par la flèche F1 de la figure 2) est destinée à permettre le passage des barres de transport BTj de leur position basse pb (illustrée sur la figure 1 et la figure 3 (en pointillés)) à leur position haute ph (illustrée sur les figures 2 et 3), et inversement. Dans la position haute ph les composants Cm transportés peuvent être transférés vers des outils présents dans des postes de travail et chargés d'effectuer au moins une opération sur eux, comme par exemple des soudages, et les composants Cm peuvent être récupérés après transfert par les outils précités. Dans la position basse pb les barres de transport BTj peuvent être soit dans une phase d'attente de fin d'opérations sur les composants Cm, soit translatées longitudinalement afin de desservir les postes de travail et notamment transporter les composants Cm qu'elles supportent jusqu'à eux.

Chaque barre de transport BTj comprend au moins un groupe d'au moins deux tiges Tjk présentant chacune une première longueur adaptée au support d'un premier composant C1, et avec au moins une tige Tjk associée au sein d'un dispositif de support DS à une tige de remplacement TRjk présentant une seconde longueur supérieure à la première longueur et adaptée au support d'un second composant C2. On comprendra qu'une tige Tjk d'un dispositif de support DS est interchangeable avec la tige de remplacement TRjk associée de ce même dispositif de support DS.

On notera que dans l'exemple illustré non limitativement sur les figures 1 et 2 chaque groupe comprend cinq tiges Tjk (k = 1 à 5), dont une Tj3 est associée à une tige de remplacement TRj3 au sein d'un dispositif de support DS. Par conséquent, chaque groupe comprend ici un unique dispositif de support DS. Mais chaque groupe peut comprendre n'importe quel nombre de tiges Tjk (k = 1 à 5), dès lors que ce nombre est au moins égal à deux et qu'au moins l'une d'entre elles est associée à une tige de remplacement TRjk au sein d'un dispositif de support DS. Ainsi, chaque groupe pourrait comprendre plusieurs (au moins deux) dispositifs de support DS, voire que des dispositifs de support DS. Par ailleurs, plus un groupe comprend de dispositifs de support DS, plus il est adaptable à un nombre important de composants Cm présentant des formes différentes (possiblement supérieur à deux).

Les tiges Tjk et tige(s) de remplacement TRjk d'un groupe sont destinées, en position verticale, à supporter temporairement, avec des tiges et tige(s) de remplacement d'un groupe voisin, un premier composant C1 ou au moins un second composant C2. On entend ici par « groupe voisin » un groupe faisant partie de la barre de transport voisine de celle (BTj) comprenant le groupe considéré et situé au même niveau longitudinal que ce dernier groupe considéré.

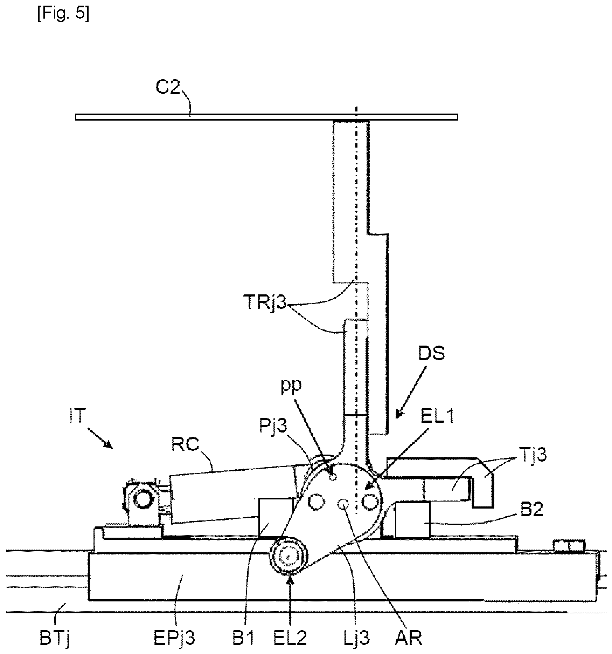

On notera que sur les figures 1 et 2 les troisièmes tiges Tj3 des premier et troisième groupes sont placées dans leur position verticale, tandis que la troisième tige de remplacement TRj3 du deuxième groupe est placée dans sa position verticale. De même, sur la figure 4 la troisième tige Tj3 de l'un des groupes est placée dans sa position verticale, tandis que sur la figure 5 la troisième tige de remplacement TRj3 de l'un des groupes est placée dans sa position verticale.

Le (chaque) dispositif de contrôle DC est propre à agir sur les tige Tjk et tige de remplacement TRjk associées d'au moins un (possiblement chaque) groupe pour placer en position verticale celle qui doit participer à un support (par exemple la tige Tjk si c'est un premier composant C1 qui doit être supporté ou la tige de remplacement TRjk si c'est un second composant C2 qui doit être supporté). A cet effet, le (chaque) dispositif de contrôle DC est installé sur la surface fixe SF en un endroit choisi situé le long du trajet suivi par les barres de transport BTj', de préférence en amont d'un poste de travail. Ainsi, chaque dispositif de support DS permet une interchangeabilité entre ses tige Tjk et tige de remplacement TRjk associées afin d'adapter le groupe auquel il appartient dans l'installation de transport IT au composant Cm devant être supporté par ce groupe. C'est particulièrement avantageux car cela permet une adaptabilité de l'installation de transport IT, d'une première part, sans électrification de ses barres de transport BTj (puisque chaque dispositif de support DS est purement mécanique), d'une deuxième part, sans qu'il faille remplacer manuellement au moins l'une des tiges de chaque groupe, d'une troisième part, sans qu'il faille remplacer manuellement ses barres de transport BTj par d'autres barres de transport. En outre, cela permet d'éviter d'avoir à utiliser au moins deux installations de transport en parallèle.

Comme cela apparaît mieux sur les figures 4 à 9, les tige Tjk et tige de remplacement TRjk associées de chaque groupe sont deux sous-parties d'une pièce Pjk qui sont perpendiculaires entre elles. Chaque pièce Pjk est montée à rotation sur une embase EPjk qui est solidarisée fixement à l'une des barres de transport BTj. De plus, une première extrémité EL1 d'un levier Ljk est solidarisée à chaque pièce Pjk, et ce levier Ljk a une seconde extrémité EL2 qui est destinée à être couplée au dispositif de contrôle DC lors d'un placement en position verticale de la tige Tjk ou tige de remplacement TRjk associée qui doit participer au support d'un composant Cm.

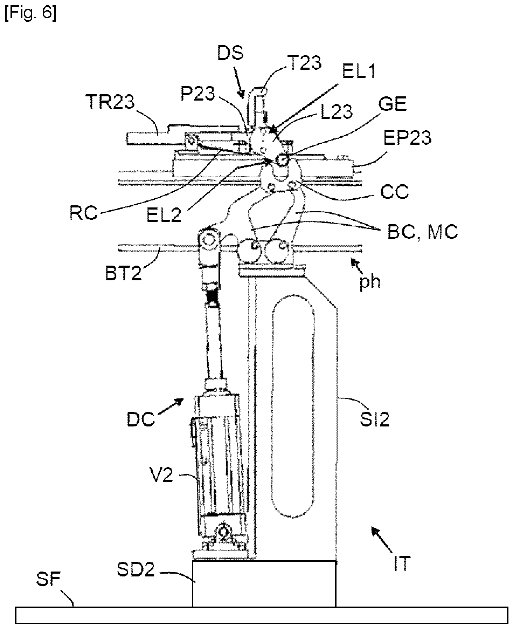

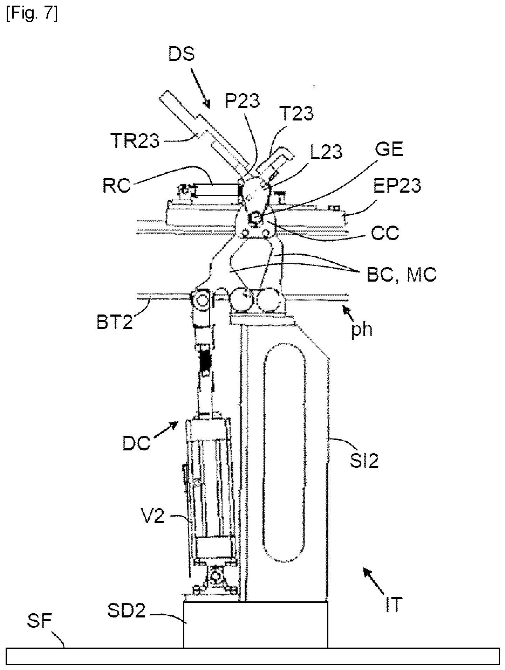

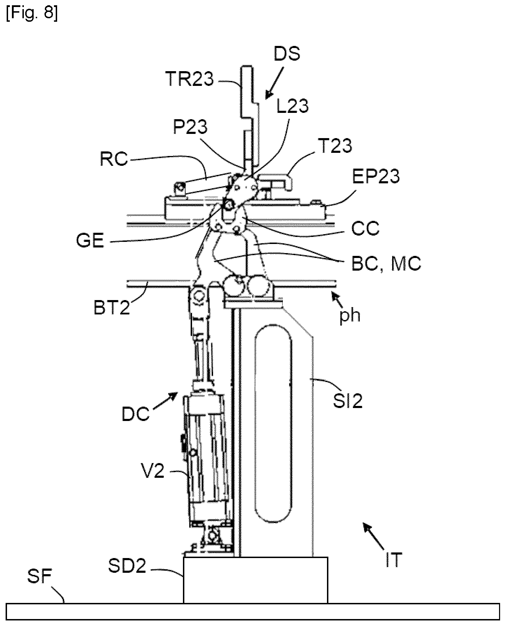

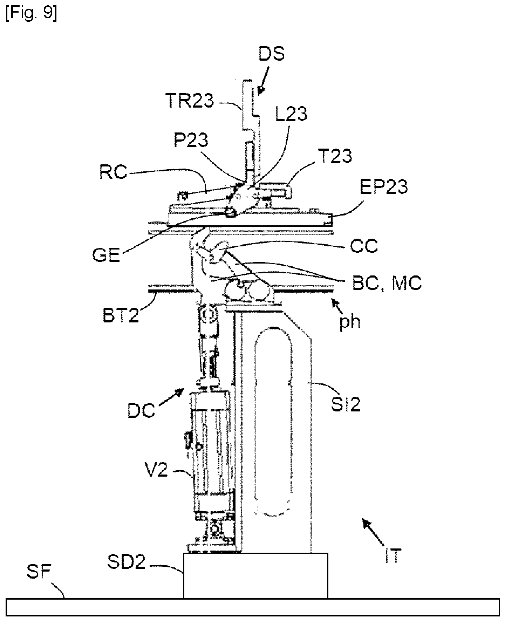

On comprendra que lorsque le dispositif de contrôle DC se couple à un levier Ljk (par exemple au niveau d'un galet d'entraînement GE solidarisé à sa seconde extrémité EL2), puis agit sur ce levier Ljk, cela provoque l'entraînement en rotation de la pièce Pjk associée, et donc le changement soit de la tige Tjk initialement en position verticale par la tige de remplacement TRjk associée qui prend alors sa position verticale (comme illustré sur les figures 6 à 9), soit de la tige de remplacement TRjk initialement en position verticale par la tige Tjk associée qui prend alors sa position verticale. La figure 6 illustre schématiquement le début du couplage d'une partie du dispositif de contrôle DC au dispositif de support DS d'un groupe lors d'une phase de remplacement de la tige T23 de ce groupe par la tige de remplacement TR23 associée. La figure 7 illustre schématiquement un stade intermédiaire de la phase de remplacement pendant lequel le dispositif de contrôle DC entraîne en rotation dans le sens horaire le levier L23 (et donc la pièce P23). La figure 8 illustre schématiquement la phase de remplacement un peu avant sa fin lorsque le dispositif de contrôle DC se découple du levier L23. La figure 9 illustre schématiquement l'état dans lequel est placé le dispositif de contrôle DC à la fin de la phase de remplacement et donc après son découplage total du levier L23. Le dispositif de contrôle DC est alors dans une nouvelle position d'attente, prêt à provoquer le remplacement en position verticale inverse de celui décrit ci-avant en référence aux figures 6 à 9, à savoir celui de la tige de remplacement TR23 par la tige T23 associée.

On notera, comme illustré non limitativement sur les figures 4 et 5, que chaque pièce Pjk peut avoir un axe de rotation AR qui est décalé par rapport à la direction de la force exercée sur la tige Tjk (figure 4) ou tige de remplacement TRjk associée (figure 5) pendant le support d'un composant Cm. Cela permet en effet, avantageusement, d'exercer un moment sur la pièce Pjk et donc de participer au maintien de cette tige Tjk ou tige de remplacement TRjk dans sa position verticale.

On notera également, comme illustré non limitativement sur les figures 4 et 5 que chaque embase EPjk peut comprendre une première butée B1 sur laquelle s'appuie la tige de remplacement TRjk associée à une tige Tjk lorsque cette dernière (Tjk) est en position verticale (figure 4), et une seconde butée B2 sur laquelle s'appuie la tige Tjk associée à une tige de remplacement TRjk lorsque cette dernière (TRjk) est en position verticale (figure 5). On comprendra que la première buté B1 permet de brider l'amplitude de la rotation de la pièce Pjk dans le sens anti-horaire (lors du remplacement de la tige de remplacement TRjk initialement en position verticale par la tige Tjk associée), et la seconde buté B2 permet de brider l'amplitude de la rotation de la pièce Pjk dans le sens horaire (lors du remplacement de la tige Tjk initialement en position verticale par la tige de remplacement TRjk associée).

On notera également, comme illustré non limitativement sur les figures 4 à 9 que chaque pièce Pjk peut être montée à rotation sur l'embase EPjk sous une force de compression qui participe au maintien de sa tige Tjk ou tige de remplacement TRjk associée dans sa position verticale pendant le support d'un composant Cm. On comprendra qu'une fois qu'une tige Tjk ou tige de remplacement TRjk a été placée dans sa position verticale par un entraînement en rotation de sa pièce Pjk dans le sens anti-horaire ou horaire, la force de compression agit sur cette pièce Pjk en s'opposant avantageusement à son entraînement en rotation dans le sens inverse (à savoir horaire ou anti-horaire).

Par exemple, chaque embase EPjk peut comprendre un ressort comprimé RC qui exerce cette force de compression. Un tel ressort comprimé RC peut être installé dans un logement défini par deux demi-coques, l'une coulissant par rapport à l'autre et étant solidarisée à rotation à l'embase EPjk associée, par exemple, tandis que l'autre est solidarisée à rotation à la pièce Pjk associée en un point pp décentré par rapport à son axe de rotation AR (voir figures 4 et 5) pour permettre la participation au maintien de la tige Tjk ou tige de remplacement TRjk associée dans sa position verticale pendant le support d'un composant Cm.

On notera également, comme illustré non limitativement sur les figures 3 et 6 à 9 que le dispositif de contrôle DC peut comprendre deux supports SDj destinés à être installés sur la surface fixe SF (ici de la chaîne de montage) en étant associés respectivement aux barres de transport BTj et sur chacun desquels sont installés un mécanisme de couplage MC et deux vérins Vj. Le mécanisme de couplage MC est couplé à une came CC et les deux vérins Vj sont propres chacun à agir sur le mécanisme de couplage MC pour provoquer un déplacement de la came CC qui est propre à placer en position verticale la tige Tjk ou tige de remplacement TRjk associée d'un groupe devant participer à un support.

Comme illustré sur les figures 6 à 9, le mécanisme de couplage MC est chargé de provoquer un déplacement de la came CC qui est propre à entraîner en rotation le levier Ljk associé dans le sens horaire ou anti-horaire selon les besoins.

Par exemple, et comme illustré non limitativement sur les figures 3 et 6 à 9, chaque came CC peut être propre à être couplée à la seconde extrémité EL2 du levier Ljk correspondant (et plus précisément, ici, son galet d'entraînement GE). Ce couplage se fait par action du vérin Vj associé à cette seconde extrémité EL2 sur le mécanisme de couplage MC associé pendant chaque changement de la tige Tjk par la tige de remplacement TRjk associée ou de la tige de remplacement TRjk par la tige Tjk associée d'un groupe.

Dans l'exemple de changement de la tige T23 (initialement en position verticale) par la tige de remplacement TR23 associée, illustré sur les figures 6 à 9, l'entraînement du levier L23 dans le sens horaire est obtenu en réduisant progressivement la longueur d'extension du vérin V2. Le changement inverse, à savoir celui de la tige de remplacement TR23 par la tige T23 associée, nécessitant l'entraînement du levier L23 dans le sens anti-horaire, est obtenu en augmentant progressivement la longueur d'extension du vérin V2.

Par exemple, et comme illustré non limitativement sur les figures 6 à 9, chaque mécanisme de couplage MC peut comprendre deux biellettes BC qui sont montées à rotation sur l'un des supports SDj et couplées à rotation à la came CC associée. L'une de ces biellettes BC (ici celle de gauche) est aussi couplée à rotation au vérin Vj associé, afin de permettre l'action sur la came CC.

Egalement par exemple, et comme illustré non limitativement sur les figures 3 et 6 à 9, les deux biellettes BC peuvent être montées à rotation indirectement sur le support SDj. Dans ce cas, on solidarise fixement sur chaque support SDj un autre support intermédiaire SIj à l'extrémité supérieur duquel sont montées à rotation les deux biellettes BC.

On notera également que le (chaque) dispositif de contrôle DC peut être programmé de manière à agir sur chaque mécanisme de couplage MC concerné en fonction du composant Cm à transporter. Il comprend à cet effet au moins un processeur associé à une mémoire.

On notera également comme illustré non limitativement sur les figures 3 à 9, que chaque tige Tjk appartenant à un dispositif de support DS peut éventuellement être constituée d'une première sous-partie faisant partie intégrante de sa pièce Pjk et une seconde sous-partie solidarisée fixement à la première sous-partie et destinée à contacter un premier composant C1. De même, chaque tige de remplacement TRjk appartenant à un dispositif de support DS peut éventuellement être constituée d'une première sous-partie faisant partie intégrante de sa pièce Pjk et une seconde sous-partie solidarisée fixement à la première sous-partie et destinée à contacter un second composant C2. Cela peut éventuellement permettre une adaptation complémentaire de l'installation de transport IT à un encore plus grand nombre de composants Cm ayant des formes différentes, par remplacement des premières sous-parties de tige Tjk et/ou des secondes sous-parties de tige de remplacement TRjk.

## Revendications

1. Installation de transport (IT) comprenant deux barres de transport (BTj) parallèles, translatables longitudinalement simultanément, et comprenant chacune au moins un groupe d'au moins deux tiges (Tjk) destinées en position verticale à supporter temporairement, avec des tiges d'un groupe voisin, un premier composant (C1), au moins une tige (Tjk) de chaque groupe présentant une première longueur adaptée au support dudit premier composant (C1) et est interchangeable avec une tige de remplacement (TRjk) associée, présentant une seconde longueur supérieure à ladite première longueur et adaptée au support d'un second composant (C2), l'installation de transport (IT) comprenant de plus un dispositif de contrôle (DC) propre à agir sur lesdites tige (Tjk) et tige de remplacement (TRjk) associées d'au moins un groupe pour placer en position verticale celle qui doit participer à un support, lesdites tige (Tjk) et tige de remplacement (TRjk) associées de chaque groupe étant deux sous-parties d'une pièce (Pjk) perpendiculaires entre elles, chaque pièce (Pjk) étant montée à rotation sur une embase (EPjk) solidarisée fixement à l'une desdites barres de transport (BTj) et ayant, solidarisée à elle (Pjk), une première extrémité (EL1) d'un levier (Ljk) ayant une seconde extrémité (EL2) **caractérisée en ce que** les deux barres de transport (BTj) sont aussi translatables verticalement simultanément et **en ce que** ladite seconde extrémité (EL2) dudit levier (Ljk) est destinée à être couplée audit dispositif de contrôle (DC) lors d'un placement en position verticale de ladite tige (Tjk) ou tige de remplacement (TRjk) associée devant participer à un support.

2. Installation de transport selon la revendication 1, **caractérisée en ce que** ladite pièce (Pjk) a un axe de rotation décalé par rapport à la direction de la force exercée sur ladite tige (Tjk) ou tige de remplacement (TRjk) associée pendant ledit support afin de participer au maintien de cette dernière (Tjk, TRjk) dans sa position verticale.

3. Installation de transport selon la revendication 1 ou 2, **caractérisée en ce que** chaque embase (EPjk) comprend une première butée (B1) sur laquelle s'appuie ladite tige de remplacement (TRjk) associée à une tige (Tjk) lorsque cette dernière (Tjk) est en position verticale, et une seconde butée (B2) sur laquelle s'appuie ladite tige (Tjk) associée à une tige de remplacement (TRjk) lorsque cette dernière (TRjk) est en position verticale.

4. Installation de transport selon l'une des revendications 1 à 3, **caractérisée en ce que** chaque pièce (Pjk) est montée à rotation sur ladite embase (EPjk) sous une force de compression participant au maintien de sa tige (Tjk) ou tige de remplacement (TRjk) associée dans sa position verticale pendant ledit support.

5. Installation de transport selon la revendication 4, **caractérisée en ce que** chaque embase (EPjk) comprend un ressort comprimé (RC) exerçant ladite force de compression.

6. Installation de transport selon l'une des revendications 1 à 5, **caractérisée en ce que** ledit dispositif de contrôle (DC) comprend deux supports (SDj) destinés à être installés sur une surface fixe en étant associés respectivement auxdites barres de transport (BTj) et sur chacun desquels sont installés un mécanisme de couplage (MC) couplé à une came (CC) et deux vérins (Vj) propres chacun à agir sur ledit mécanisme de couplage (MC) pour provoquer un déplacement de ladite came (CC) propre à placer en position verticale ladite tige (Tjk) ou tige de remplacement (TRjk) associée d'un groupe devant participer à un support.

7. Installation de transport selon la revendication 1 ou 2 prise en combinaison avec la revendication 6, **caractérisée en ce que** chaque came (CC) est propre à être couplée à ladite seconde extrémité (EL2) du levier (Ljk) correspondant par action dudit vérin (Vj) associé sur ledit mécanisme de couplage (MC) associé pendant chaque changement de ladite tige (Tjk) par ladite tige de remplacement (TRjk) associée ou de ladite tige de remplacement (TRjk) par ladite tige (Tjk) associée d'un groupe.

8. Installation de transport selon la revendication 6 ou 7, **caractérisée en ce que** chaque mécanisme de couplage (MC) comprend deux biellettes (BC) montées à rotation sur l'un desdits supports (SDj) et couplées à rotation à ladite came (CC) associée.

9. Installation de transport selon l'une des revendications 1 à 8, **caractérisée en ce qu'**elle est propre à transporter des composants destinés à équiper des véhicules.

## Patentansprüche

1. Transportanlage (IT) mit zwei parallelen, gleichzeitig längs verschiebbaren Transportstangen (BTj), die jeweils mindestens eine Gruppe von mindestens zwei Stangen (Tjk) umfassen, die in vertikaler Position dazu bestimmt sind, zusammen mit Stangen einer benachbarten Gruppe ein erstes Bauteil (C1) vorübergehend zu stützen, wobei mindestens eine Stange (Tjk) jeder Gruppe eine erste Länge aufweist, die zur Unterstützung des ersten Bauteils (C1) geeignet ist, und durch eine zugehörige Ersatzstange (TRjk) austauschbar ist, deren zweite Länge größer als die erste ist und zur Unterstützung eines zweiten Bauteils (C2) geeignet ist, wobei die Transportanlage (IT) außerdem eine Steuervorrichtung (DC) umfasst, die auf die zugehörige Stange (Tjk) und die Ersatzstange (TRjk) mindestens einer Gruppe einwirken kann, um die Stange, die an einer Unterstützung teilnehmen soll, in eine vertikale Position zu bringen, wobei die zugehörige Stange (Tjk) und die Ersatzstange (TRjk) jeder Gruppe zwei Unterteile eines Teils (Pjk) sind, die senkrecht zueinander stehen, wobei jedes Teil (Pjk) drehbar auf einer Basis (EPjk) montiert ist, die fest an einer der Transportstangen (BTj) befestigt ist und an der (Pjk) ein erstes Ende (EL1) eines Hebels (Ljk) mit einem zweiten Ende (EL2) befestigt ist, **dadurch gekennzeichnet, dass** die beiden Transportstangen (BTj) auch gleichzeitig vertikal verschiebbar sind und dass das zweite Ende (EL2) des Hebels (LJk) dazu bestimmt ist, mit der Steuervorrichtung (DC) gekoppelt zu werden, wenn die Stange (Tjk) oder die zugehörige Ersatzstange (TRjk), die an einer Halterung beteiligt sein soll, in eine vertikale Position gebracht wird.

2. Transportanlage nach Anspruch 1, **dadurch gekennzeichnet, dass** das Teil (Pjk) eine Drehachse aufweist, die relativ zur Richtung der auf die Stange (Tjk) oder die zugehörige Ersatzstange (TRjk) während der Unterstützung ausgeübten Kraft versetzt ist, um dazu beizutragen, die Stange (Tjk, TRjk) in ihrer vertikalen Position zu halten.

3. Transportanlage nach Anspruch 1 oder 2, **dadurch gekennzeichnet, dass** jede Basis (EPjk) einen ersten Anschlag (B1) aufweist, auf dem die einer Stange (Tjk) zugeordnete Ersatzstange (TRjk) aufliegt, wenn sich die letztere (Tjk) in vertikaler Position befindet, und einen zweiten Anschlag (B2), auf dem die einer Ersatzstange (TRjk) zugeordnete Stange (Tjk) aufliegt, wenn sich die letztere (TRjk) in vertikaler Position befindet.

4. Transportanlage nach einem der Ansprüche 1 bis 3, **dadurch gekennzeichnet, dass** jedes Teil (Pjk) unter einer Druckkraft drehbar auf der Basis (EPjk) montiert ist, die dazu beiträgt, die zugehörige Stange (Tjk) oder Ersatzstange (TRjk) während der Unterstützung in ihrer vertikalen Position zu halten.

5. Transporteinrichtung nach Anspruch 4, **dadurch gekennzeichnet, dass** jede Basis (EPjk) eine Druckfeder (RC) umfasst, die die genannte Druckkraft ausübt.

6. Transportanlage nach einem der Ansprüche 1 bis 5, **dadurch gekennzeichnet, dass** die Steuervorrichtung (DC) zwei Halterungen (SDj) umfasst, die dazu bestimmt sind, auf einer festen Fläche installiert zu werden, während sie jeweils mit den Transportstangen (BTj) verbunden sind, und an denen jeweils ein Kopplungsmechanismus (MC) installiert ist, der mit einer Nocke (CC) und zwei Zylindern (Vj) verbunden ist, die jeweils auf den Kopplungsmechanismus (MC) einwirken können, um eine Bewegung der Nocke (CC) zu verursachen, die in der Lage ist, die Stange (Tjk) oder Ersatzstange (TRjk), die einer Gruppe zugeordnet ist, in eine vertikale Position zu bringen, um an einer Halterung teilzunehmen.

7. Transporteinrichtung nach Anspruch 1 oder 2 in Kombination mit Anspruch 6, **dadurch gekennzeichnet, dass** jede Nocke (CC) dazu geeignet ist, bei jedem Austausch der Stange (Tjk) durch die zugehörige Austauschstange (TRjk) oder der Austauschstange (TRjk) durch die zugehörige Stange (Tjk) einer Gruppe durch Einwirkung der zugehörigen Hebevorrichtung (Vj) auf den zugehörigen Kupplungsmechanismus (MC) mit dem zweiten Ende (EL2) des entsprechenden Hebels (Ljk) gekuppelt zu werden.

8. Transportanlage nach Anspruch 6 oder 7, **dadurch gekennzeichnet, dass** jeder Kupplungsmechanismus (MC) zwei Pleuelstangen (BC) umfasst, die drehbar an einem der Träger (SDj) montiert und drehbar mit der zugehörigen Nocke (CC) gekoppelt sind.

9. Transportanlage nach einem der Ansprüche 1 bis 8, **dadurch gekennzeichnet, dass** sie zum Transport von zur Ausstattung von Fahrzeugen bestimmten Komponenten geeignet ist.

## Claims

1. Transport installation (IT) comprising two parallel transport bars (BTj), longitudinally translatable simultaneously, and each comprising at least one group of at least two rods (Tjk) intended in a vertical position to temporarily support, with rods of a neighboring group, a first component (C1), at least one rod (Tjk) of each group having a first length adapted to the support of said first component (C1) and is interchangeable with an associated replacement rod (TRjk), having a second length greater than said first length and adapted to the support of a second component (C2), the transport installation (IT) further comprising a control device (DC) capable of acting on said associated rod (Tjk) and replacement rod (TRjk) of at least one group to place in a vertical position the one which must participate in a support, said associated rod (Tjk) and replacement rod (TRjk) of each group being two sub-parts of a part (Pjk) perpendicular to each other, each part (Pjk) being rotatably mounted on a base (EPjk) fixedly secured to one of said transport bars (BTj) and having, secured to it (Pjk), a first end (EL1) of a lever (Ljk) having a second end (EL2) **characterized in that** the two transport bars (BTj) are also simultaneously vertically translatable and **in that** said second end (EL2) of said lever (LJk) is intended to be coupled to said control device (DC) when said rod (Tjk) or associated replacement rod (TRjk) is placed in a vertical position to participate in a support.

2. Transport installation according to claim 1, **characterized in that** said part (Pjk) has an axis of rotation offset relative to the direction of the force exerted on said rod (Tjk) or associated replacement rod (TRjk) during said support in order to participate in maintaining the latter (Tjk, TRjk) in its vertical position.

3. Transport installation according to claim 1 or 2, **characterized in that** each base (EPjk) comprises a first stop (B1) on which said replacement rod (TRjk) associated with a rod (Tjk) rests when the latter (Tjk) is in a vertical position, and a second stop (B2) on which said rod (Tjk) associated with a replacement rod (TRjk) rests when the latter (TRjk) is in a vertical position.

4. Transport installation according to one of claims 1 to 3, **characterized in that** each part (Pjk) is rotatably mounted on said base (EPjk) under a compressive force participating in maintaining its associated rod (Tjk) or replacement rod (TRjk) in its vertical position during said support.

5. Transport installation according to claim 4, **characterized in that** each base (EPjk) comprises a compressed spring (RC) exerting said compressive force.

6. Transport installation according to one of claims 1 to 5, **characterized in that** said control device (DC) comprises two supports (SDj) intended to be installed on a fixed surface while being associated respectively with said transport bars (BTj) and on each of which are installed a coupling mechanism (MC) coupled to a cam (CC) and two jacks (Vj) each capable of acting on said coupling mechanism (MC) to cause a movement of said cam (CC) capable of placing in a vertical position said rod (Tjk) or replacement rod (TRjk) associated with a group to participate in a support.

7. Transport installation according to claim 1 or 2 taken in combination with claim 6, **characterized in that** each cam (CC) is adapted to be coupled to said second end (EL2) of the corresponding lever (Ljk) by action of said associated cylinder (Vj) on said associated coupling mechanism (MC) during each change of said rod (Tjk) by said associated replacement rod (TRjk) or of said replacement rod (TRjk) by said associated rod (Tjk) of a group.

8. Transport installation according to claim 6 or 7, **characterized in that** each coupling mechanism (MC) comprises two connecting rods (BC) mounted for rotation on one of said supports (SDj) and coupled for rotation to said associated cam (CC).

9. Transport installation according to one of claims 1 to 8, **characterized in that** it is adapted to transport components intended to equip vehicles.
